(19) Europäisches Patentamt
European Patent Office
Office européen des brevets

(11) **EP 2 555 917 B1**

(12) **EUROPÄISCHE PATENTSCHRIFT**

(45) Veröffentlichungstag und Bekanntmachung des Hinweises auf die Patenterteilung:
**01.06.2016 Patentblatt 2016/22**

(21) Anmeldenummer: **11712588.0**

(22) Anmeldetag: **07.04.2011**

(51) Int Cl.:
*B31F 1/28* *(2006.01)*     *C09J 125/14* *(2006.01)*
*C09J 131/04* *(2006.01)*     *C09J 133/08* *(2006.01)*
*C09J 135/06* *(2006.01)*

(86) Internationale Anmeldenummer:
**PCT/EP2011/055447**

(87) Internationale Veröffentlichungsnummer:
**WO 2011/124651 (13.10.2011 Gazette 2011/41)**

(54) **VERWENDUNG SYNTHETISCHER KLEBSTOFFE FÜR DIE HERSTELLUNG VON WELLPAPPE**

USE OF SYNTHETIC ADHESIVES FOR PRODUCING CORRUGATED CARDBOARD

UTILISATION D'ADHÉSIFS SYNTHÉTIQUES POUR LA FABRICATION DE CARTON ONDULÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.04.2010 EP 10159526**

(43) Veröffentlichungstag der Anmeldung:
**13.02.2013 Patentblatt 2013/07**

(73) Patentinhaber: **BHS Corrugated Maschinen-und Anlagenbau GmbH**
**92729 Weiherhammer (DE)**

(72) Erfinder:
• **SCHUMACHER, Karl-Heinz**
**67433 Neustadt (DE)**
• **FONSECA, Gledison**
**68161 Mannheim (DE)**
• **AL-HELLANI, Rabie**
**67059 Ludwigshafen (DE)**

• **GASCHLER, Wolfgang**
**94559 Niederwinkling (DE)**
• **KRÜGER, Ellen**
**67166 Otterstadt (DE)**
• **HEROLD, Andrea**
**69469 Weinheim (DE)**
• **STEIN, Hildegard**
**Mexico D.F. 11560 (MX)**
• **HARTZ, Oliver**
**67117 Limburgerhof (DE)**
• **KRÖNER, Hubertus**
**67435 Neustadt (DE)**

(74) Vertreter: **Lindner, Anton et al**
**BASF Schweiz AG**
**IP Department**
**PO Box**
**4002 Basel (CH)**

(56) Entgegenhaltungen:
**WO-A1-95/00596     WO-A1-2009/145642**

EP 2 555 917 B1

**Beschreibung**

Die Erfindung betrifft die Verwendung synthetischer Klebstoffe auf Basis von wässrigen Dispersionen mit hohem Feststoffgehalt an bestimmten, ausgewählten synthetischen, dispergierten Copolymeren für die Herstellung von Wellpappe bei relativ niedrigen Temperaturen von unterhalb 95 °C und hohen Bahngeschwindigkeiten von mindestens 150 m/min sowie ein entsprechendes Verfahren zur Herstellung von Wellpappe.

Wellpappe ist eine der am weitesten verbreiteten Verpackungen der Welt. Sie weist mindestens eine gewellte Papierbahn auf, die mit glatten Papierbahnen, den Deckbahnen, verklebt ist. Sie besteht häufig aus drei Lagen. Zwei äußere, ebene Schichten Papier und eine dazwischen geklebte, gewellte Lage. Es gibt auch Wellpappen mit zwei oder drei gewellten Lagen und insgesamt 5 bzw. 7 Schichten. Die Herstellung von Wellpappe ist aufwändig und mit hohem Rohstoff- und Energieaufwand verbunden. Bei der herkömmlichen Herstellung wird das Rohpapier erwärmt und mit heißem Wasserdampf befeuchtet. Dadurch bekommt es die erforderliche Elastizität und kann geformt werden. Zur Verformung in Wellenform wird die erwärmte und befeuchtete Papierbahn zwischen zwei beheizten Riffelwalzen unter Druck- und Hitzeeinwirkung gewellt. Übliche Temperaturen sind hierbei 180°C und mehr. Die noch warmen Wellenspitzen werden mit einem erwärmten Stärkeleim bestrichen und unter leichtem Druck mit der Deckbahn verklebt. Der Stärkeleim wird hierbei auf Temperaturen oberhalb des Gelierungspunktes der Stärke (60-64 °C) erhitzt. Häufig wird auch die Deckbahn vorgewärmt, um die erforderliche Temperatur oberhalb des Gelierungspunktes der Stärke für die Dauer des Verklebungsvorgangs bis zum Einsetzen einer ausreichenden Haftung der Papierbahnen aneinander sicherzustellen.

In der CA 1071085 wird ein Verfahren zur Herstellung von Wellpappe beschrieben, in welchem eine Erwärmung der Deckbahn vorteilhaft sein kann, aber nicht zwingend erforderlich ist. Verwendet wird ein Vinylacetathomopolymer in Kombination mit einem Vernetzer. Obwohl die Klebstoffformulierung selber nicht erwärmt werden muss, erfolgt die Wellung unter Erhitzen mit Wasserdampf bei einer Temperatur von 149°C (300°F) und unter Verwendung von auf 99°C (210°F) erhitzten Walzen, sodass die anschließende Verklebung bei erhöhter Temperatur erfolgt.

In der DE 2347145 wird ein Klebemittel zur Herstellung von Wellpappe beschrieben in Form einer wässrigen Dispersion enthaltend mineralische Teilchen und polymere Teilchen aus Styrol/Butadien Copolymeren. Auf ein Stück vorgefertigtem Wellpapier wird in einem diskontinuierlichen Verfahren bei Raumtemperatur ein Deckpapier aufgeklebt, wobei die Abbindezeit 15 s beträgt. Derart lange Abbindezeiten sind für kontinuierliche Verfahren ungeeignet. Daher wird das Klebemittel auch als besonders'brauchbar bezeichnet für Fälle, wenn eine Wartezeit eingehalten werden muss zwischen Auftrag des Klebmittels und Aneinanderpressen der mit Klebemittel bestrichenen Schichten, z.B. bei der Herstellung von großen Papiersäcken.

In der DE 2243687 wird ein Klebemittel zur Herstellung von Wellpappe beschrieben in Form einer wässrigen Dispersion enthaltend bestimmte, ausgewählte synthetische Polymere in Kombination mit bestimmten, ausgewählten mineralischen Teilchen. Die der Erfindung der DE 2243687 zugrunde liegende Aufgabe bestand darin, ein Klebemittel zur Verfügung zustellen, welches bei wenig erhöhten Temperaturen hergestellt und aufgetragen wird, aber mit gebräuchlichen Maschinen zur Herstellung von Wellpappe verwendet wird. Bei der Berührung dieses bei wenig erhöhten Temperaturen hergestellten und aufgetragenen Klebmittels mit der Wellbahn und der zuvor erhitzten oder erwärmten Deckschicht wird auch die Temperatur des Klebmittels erhöht. Zur Herstellung der Wellung wurde das gewellte Papier mit Wasserdampf behandelt und die Riffelwalzen zur Wellung sind auf etwa 180°C erhitzt. In der DE 3042850 wird ein so genannter kalthärtender Kleber für die Herstellung von Wellpappe beschrieben. Der Kleber wird bei hohen Temperaturen aufgetragen und geliert beim Abkühlen. Der Kleber besteht im Wesentlichen aus in Wasser gelöstem Polyvinylalkohol, einem Füllstoff und einer wasserlöslichen Borverbindung. In der DE 1594231 wird ein wärmeaktivierbarer Klebstoff zur Herstellung von Wellpappe beschrieben. Der Klebstoff enthält in Wasser gelösten Polyvinylalkohol, suspendierten Ton, eine Titanoxalat-Komplexverbindung und Ammoniumbicarbonat. In der EP 0181579 wird ein Verfahren zur Herstellung von Wellpappe beschrieben, wobei eine Klebstoffzusammensetzung auf 60 bis 95°C erwärmt und auf die Faltspitzen der nach herkömmlichem Verfahren, d.h. bei hohen Temperaturen gewellten Bahn aufgetragen wird. Die Klebstoffzusammensetzung enthält Polyvinylalkohol in wässriger Lösung. In der WO 06/086754 wird eine Auftragevorrichtung beschrieben fürwässrige Klebstoffzusammensetzungen zur Herstellung von Wellpappe und laminierter Pappe, wobei weniger Klebemittel als sonst üblich verwendet werden kann. Als Substrat für die Klebstoffauftragung wird eine Wellpappe verwendet, welche bereits eine nach herkömmlichem Verfahren, d.h. bei hohen Temperaturen hergestellte Wellbahn und eine darauf geklebte erste Deckbahn aufweist und auf welche eine zweite Deckbahn geklebt wird. Der Klebstoff zum Aufkleben der zweiten Deckbahn wird beispielsweise auf ca. 38°C oder 43°C (100°F bzw. 110°F) erwärmt oder auf erwärmtem Substrat aufgebracht. In WO 2009/145642 wird die Verwendung synthetischer Klebstoffe für die Herstellung von Wellpappe beschrieben, wobei die Wellpappe mindestens eine gewellte Papierbahn und mindestens eine glatte Deckbahn aufweist und die Wellung der gewellten Papierbahn bei Papiertemperaturen unterhalb von 95°C und mit einer Bahngeschwindigkeit von 100 m/min erzeugt wird; wobei in einem kontinuierlichen Prozess unmittelbar nach Erzeugung der Wellung der gewellten Papierbahn ein Weilklebstoff auf die gewellte Papierbahn aufgetragen wird und die gewellte Papierbahn mit mindestens einer ersten Deckbahn verklebt wird; wobei als Wellklebstoff eine wässrige Klebstoffdispersion eingesetzt wird auf Basis mindestens eines synthetischen, dispergierten Polymeren, ausgewählt aus der Gruppe bestehend aus Vinylacetat Copolymeren, wobei die synthetischen, dispergierten Polymere Glasübergangstemperaturen aufweisen, welche unterhalb der Oberflächentemperatur der gewellten Papierbahn, auf die sie aufgetragen werden, liegen.

Aufgabe der vorliegenden Erfindung war es, einen Klebstoff für die energie- und kostengünstige Herstellung von Wellpappe zur Verfügung zu stellen, der eine gute Verklebung bei vergleichsweise niedrigen Temperaturen und hohen Geschwindigkeiten ermöglicht, wobei insbesondere die ausgewählte Klebstoffzusammensetzung eine möglichst schnelle Abbindung sowie eine möglichst hohe Anfangsklebrigkeit bei niedrigen Temperaturen aufweist Durch den Klebstoff sollte außerdem die Recyclefähigkeit der Wellpappe nicht oder möglichst wenig beeinträchtigt werden.

Gegenstand der Erfindung ist die Verwendung synthetischer Klebstoffe für die Herstellung von Wellpappe, wobei die Wellpappe mindestens eine gewellte Papierbahn und mindestens eine glatte Deckbahn aufweist und die Wellung der gewellten Papierbahn bei Papiertemperaturen unterhalb von 95°C und mit einer Bahngeschwindigkeit von größer 150 m/min erzeugt wird,

- wobei in einem kontinuierlichen Prozess unmittelbar nach Erzeugung der Wellung der gewellten Papierbahn ein Wellklebstoff, der vorzugsweise nicht erwärmt ist, auf die gewellte Papierbahn aufgetragen wird und die gewellte Papierbahn mit mindestens einer ersten Deckbahn verklebt wird;
- wobei als Wellklebstoff eine wässrige Klebstoffdispersion mit vorzugsweise mehr als 40 Gew.% Feststoffgehalt eingesetzt wird auf Basis mindestens eines synthetischen, dispergierten Polymeren, ausgewählt aus der Gruppe bestehend aus Acrylatcopolymeren, Copolymerisaten aus Vinylaromaten und konjugierten aliphatischen Dienen und Vinylacetat/Alkylen Copolymeren,
- wobei die synthetischen, dispergierten Polymere Glasübergangstemperaturen aufweisen, welche größer 20 °C sind und unterhalb der Oberflächentemperatur der gewellten Papierbahn, auf die sie aufgetragen werden, liegen.

Als Wellklebstoff wird eine wässrige Klebstoffdispersion auf Basis mindestens eines synthetischen, dispergierten Polymeren eingesetzt. Der Feststoffgehalt beträgt vorzugsweise mehr als 40 Gew.%, bevorzugt mehr als 50 Gew.%, z.B. 50 bis 60 Gew.%. Der pH-Wert der Klebstoffdispersion wird vorzugsweise auf pH größer 3,7, insbesondere auf einen pH-Wert zwischen 4 und 8 eingestellt.

Die Glastemperatur Tg der dispergierten Polymere ist größer 20 °C, vorzugsweise größer oder gleich 25°C und liegt unterhalb der Oberflächentemperatur der gewellten Papierbahn, d.h. bei Erzeugung der Wellung der gewellten Papierbahn bei einer Temperatur von kleiner 95°C wird ein Polymer mit einer Tg von z.B. kleiner 95 °C verwendet. Bei Erzeugung der Wellung der gewellten Papierbahn bei einer Temperatur von kleiner 90°C wird ein Polymer mit einer Tg von z.B. kleiner 90 °C verwendet usw. Die Glasübergangstemperatur Tg des in der wässrigen Klebstoffformulierung dispergierten Polymers beträgt vorzugsweise weniger als 60°C oder weniger als 55°C. Vorzugsweise ist die Glasübergangstemperatur im Bereich von größer +20°C oder größer oder gleich +25°C bis kleiner oder gleich +70°C oder kleiner oder gleich +60°C oder im Bereich von größer oder gleich +25°C bis kleiner oder gleich +55 °C.

Mit der Glasübergangstemperatur $T_g$, ist der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt. Die Glasübergangstemperatur lässt sich bestimmen durch Differential Scanning Calorimetrie (ASTM D 3418-08, sogenannte "midpoint temperature"). Durch gezielte Variation von Art und Menge der Monomeren ist es dem Fachmann erfindungsgemäß möglich, wässrige Polymerzusammensetzungen herzustellen, deren Polymere eine Glasübergangstemperatur im gewünschten Bereich aufweisen. Eine Orientierung ist mittels der Fox-Gleichung möglich. Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für eine Abschätzung der Glasübergangstemperatur von höchstens schwach vernetzten Mischpolymerisaten in guter Näherung:

$$1/T_g = x^1/T_g^1 + x^2/T_g^2 + \dots x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J. Wiley, New York 1975, und 3rd Ed. J. Wiley, New York 1989.

Die Mindestverarbeitungstemperatur des Wellklebstoffs beträgt vorzugsweise kleiner als 80°C oder maximal 60°C und beträgt z.B. von 5 bis 60°C. Die Mindestverarbeitungstemperatur ist diejenige Temperatur, bei der der Wellklebstoff für die Auftragung auf die Papierbahn ausreichend fluide ist, insbesondere eine Viskosität von weniger als 7000 mPa s oder weniger als 5000 mPa s, beispielsweise von 2000 bis 5000 mPa s aufweist. Die Viskosität der Klebstoffdispersion beträgt unmittelbar vor dem Auftragen vorzugsweise weniger als 7000 mPa s oder weniger als 6000 mPa s, beispielsweise von 2000 bis 5000 mPa s. Viskositäten können gemessen werden in einem Brookfield-Viskosimeter (RVT Spindel 5, 10 Umdrehungen pro Minute) bei der Auftragetemperatur (z.B. 20°C). Vorzugsweise ist die Viskosität der Klebstoffdispersion bei 60 °C weniger als 7000 mPa s oder weniger als 5000 mPa s, beispielsweise von 2000 bis 5000 mPa s. Besonders bevorzugt ist die Viskosität der Klebstoffdispersion bei 20 °C weniger als 7000 mPa s oder weniger als 5000 mPa s, beispielsweise von 2000 bis 5000 mPa s.

Die im erfindungsgemäßen Verfahren verwendeten, dispergierten synthetischen Polymere sind ausgewählt aus der Gruppe bestehend aus Acrylatcopolymeren, Copolymerisaten aus Vinylaromaten und konjugierten aliphatischen Dienen und Vinylacetat/Alkylen Copolymeren. Sie sind durch radikalische Polymerisation von ethylenisch ungesättigten Verbindungen (Monomere) erhältlich.

Erfindungsgemäß einzusetzende Acrylatcopolymere sind Copolymere aus mindestens zwei verschiedenen (Meth)acrylsäureestern. Im Folgenden wird die Bezeichnung "(Meth)acryl..." als abkürzende Schreibweise verwendet für "Acryl... oder Methacryl...". Die Acrylatcopolymere bestehen vorzugsweise zu mindestens 60 Gew.%, oder zu mindestens 80 Gew.%, besonders bevorzugt zu mindestens 90 Gew.% oder zu mindestens 95 Gew.% und bis zu 100 Gew.% aus (Meth)acrylsäureestern, vorzugsweise $C_1$-$C_{20}$-Alkyl(meth)acrylaten. Geeignete (Meth)acrylatmonomere sind z.B. (Meth)acrylsäurealkylester mit einem $C_1$-$C_{20}$-Alkylrest. Bevorzugt sind $C_1$- bis $C_{10}$-Alkylacrylate und $C_1$- bis $C_{10}$-Alkylmethacrylate, insbesondere $C_1$- bis $C_8$-Alkylacrylate und -methacrylate. Ganz besonders bevorzugt sind Methylacrylat, Methylmethacrylat, Ethylacrylat, n-Butylacrylat, n-Hexylacrylat, Octylacrylat, 2-Ethylhexylacrylat und 2-Propylheptylacrylat sowie Mischungen dieser Monomere. Insbesondere sind Mischungen von drei oder mehr der (Meth)acrylsäurealkylester geeignet.

Neben den Hauptmonomeren können die erfindungsgemäß einzusetzenden Polymere weitere Monomere enthalten, z.B. Monomere mit Carbonsäure-, Sulfonsäure- oder Phosphonsäuregruppen. Bevorzugt sind Carbonsäuregruppen. Genannt seien z.B. Acrylsäure, Methacrylsäure, Itaconsäure, Maleinsäure oder Fumarsäure. Der Gehalt an Säure-Monomeren im Polymer kann z. B. 0 bis 10 Gew. %, insbesondere 0,05 bis 5 Gew. %, bezogen auf das Polymer betragen. Die Säuregruppen können in Form ihrer Salze vorliegen. Weitere Monomere sind z.B. auch Hydroxylgruppen enthaltende Monomere, insbesondere $C_1$-$C_{10}$-Hydroxyalkyl(meth)acrylate oder (Meth)acrylamid. Als weitere Monomere seien darüber hinaus Phenyloxyethylglykolmono-(meth)acrylat, Glycidyl(meth)acrylat, Aminoalkyl(meth)acrylate wie z.B. 2-Aminoethyl-(meth)acrylat genannt. Alkylgruppen weisen vorzugsweise von 1 bis 20 C-Atome auf. Als weitere Monomere seien auch vernetzende Monomere genannt. Die weiteren Monomere werden im Allgemeinen in untergeordneten Mengen eingesetzt, ihr Anteil liegt insgesamt vorzugsweise unter 10 Gew. %, insbesondere unter 5 Gew. %.

In einer Ausführungsform ist das dispergierte Polymer der Klebstoffformulierung ein Vinylacetat/Alkylen Copolymer. Vinylacetat/Alkylen Copolymere sind Copolymere aus Vinylacetat und mindestens einem Alkylen, vorzugsweise mindestens einem C2- bis C8-Alkylen wie z.B. Ethylen und/oder Propylen.

Copolymerisaten aus Vinylaromaten und konjugierten aliphatischen Dienen sind z.B. solche aus

(a) 19,9 bis 80 Gew.-Teilen mindestens einer vinylaromatischen Verbindung,
(b) 19,9 bis 80 Gew.-Teilen mindestens eines konjugierten aliphatischen Diens,
(c) 0,1 bis 15 Gew.-Teilen mindestens einer ethylenisch ungesättigten Säure und
(d) 0 bis 20 Gew.-Teilen mindestens eines anderen monoethylenisch ungesättigten Monomeren.

Vinylaromatische Verbindungen sind z.B. Styrol, α-Methylstyrol und/oder Vinyltoluol. Aus dieser Gruppe von Monomeren wird vorzugsweise Styrol verwendet. 100 Gew.-Teile der bei der Polymerisation insgesamt eingesetzten Monomermischungen enthalten beispielsweise 19,9 bis 80 Gew.-Teile und vorzugsweise 25 bis 70 Gew.-Teile mindestens eines Vinylaromaten.

Konjugierte aliphatische Diene sind beispielsweise 1,3-Butadien, Isopren, 1,3-Pentadien, 1,3-Dimethylbutadien und Cyclopentadien. Aus dieser Gruppe von Monomeren setzt man vorzugsweise 1,3-Butadien und/oder Isopren ein. 100 Gew.-Teile der Monomermischungen, die bei der Emulsionspolymerisation insgesamt eingesetzt werden, enthalten beispielsweise 19,9 bis 80 Gew.-Teile, vorzugsweise 25 bis 70 Gew.-Teile und insbesondere 25 bis 60 Gew.-Teile mindestens eines konjugierten aliphatischen Diens.

Ethylenisch ungesättigte Säuren sind beispielsweise ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende alpha,beta-monoethylenisch ungesättigte Mono- und Dicarbonsäuren eingesetzt. Beispiele hierfür sind Acrylsäure, Methacrylsäure, Maleinsäure, Fumarsäure, Crotonsäure, Vinylessigsäure und Vinylmilchsäure. Als ethylenisch ungesättigte Sulfonsäuren eignen sich z.B. Vinylsulfonsäure, Styrolsulfonsäure, Acrylamidomethylpropansulfonsäure, Sulfopropylacrylat und Sulfopropylmethacrylat. Die Säuregruppen enthaltenden Monomeren können in Form der freien Säuren sowie in partiell oder vollständig mit Alkalilaugen oder mit Ammoniak oder mit einer Ammoniumbase neutralisierten Form bei der Polymerisation eingesetzt werden. Vorzugsweise verwendet man Natronlauge, Kalilauge oder Ammoniak als Neutralisationsmittel. 100 Gew.-Teile der Monomermischungen, die bei der Emulsionspolymerisation eingesetzt werden, enthalten beispielsweise 0,1 bis 15 Gew.-Teile, vorzugsweise 0,1 bis 8 Gew.-Teile und meistens 1 bis 5 Gew.-Teile mindestens eines ethylenisch ungesättigten Säuremonomers.

Andere monoethylenisch ungesättigte Monomere sind z.B. ethylenisch ungesättigte Carbonsäurenitrile wie insbesondere Acrylnitril und Methacrylnitril, ethylenisch ungesättigte Carbonsäureamide wie insbesondere Acrylamid und Methacrylamid, Vinylester von gesättigten $C_1$- bis $C_{18}$-Carbonsäuren, vorzugsweise Vinylacetat, sowie Ester der Acrylsäure und der Methacrylsäure mit einwertigen $C_1$- bis $C_{18}$-Alkoholen wie Methylacrylat, Methylmethacrylat, Ethylacrylat, Ethylmethacrylat, n-Propylacrylat, n-Propylmethacrylat, Isopropylacrylat, Isopropylmethacrylat, n-Butylacrylat, n-Butylmethacrylat, Isobutylacrylat, Isobutylmethacrylat, sec.-Butylacrylat. sec.-Butylmethacrylat, tert.-Butylacrylat, tert.-Butylmethacrylat, Pentylacrylate, Pentylmethacrylate, 2-Ethylhexylacrylat, 2-Ethylhexylmethacrylat, Allylester gesättigter Carbonsäuren, Vinylether, Vinylketone, Dialkylester ethylenisch ungesättigter Carbonsäuren, N-Vinylpyrrolidon, N-Vinylpyrrolidin, N-Vinylformamid, N,N-Dialkylamonialkylacrylamide, N,N-Dialkylaminoalkylmethacrylamide, N,N-Dialkylaminoalkylacrylate, N,N-Dialkylaminoalkylmethacrylate, Vinylchlorid und Vinylidenchlorid. Diese Gruppe von Monomeren wird gegebenenfalls zur Modifizierung der Polymeren eingesetzt. 100 Gew.-Teile der bei der Emulsionspolymerisation eingesetzten Monomermischungen enthalten beispielsweise 0 bis 20 Gew.-Teile, oder 0,1 bis 15 Gew.-Teile und insbesondere 0,1 bis 10 Gew.-Teile mindestens eines anderen monoethylenisch ungesättigten Monomers.

Besonders bevorzugt sind die synthetischen, dispergierten Polymere ausgewählt aus der Gruppe bestehend aus Acrylatcopolymeren von mindestens zwei verschiedenen $C_1$- bis $C_8$-Alkyl(meth)acrylaten, Styrol/Butadien Copolymeren und Vinylacetat/Ethylen Copolymeren.

Die Polymere können durch Emulsionspolymerisation hergestellt werden. Um besonders hohe Feststoffgehalte, z.B. von mehr als 55 Gew.-% zu erreichen, sollte man eine bi- oder polymodale Teilchengröße einstellen, da sonst die Viskosität zu hoch wird und die Dispersion schwerer handhabbar ist. Die Erzeugung einer neuen Teilchengeneration kann beispielsweise durch Zusatz von Saat, durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten.

In einer weiteren Ausführungsform enthält die Klebstoffdispersion eine wässrige Polymerisatdispersion von durch radikalische Polymerisation ungesättigter Monomeren (insbesondere den oben genannten) erhältlichen Polymerisaten, die wenigstens ein durch Hydrolyse in wässriger Phase erhältliches Stärkeabbauprodukt zugesetzt enthalten. Das Stärkeabbauprodukt weist ein gewichtsmittleres Molekulargewicht Mw von vorzugsweise 2500 bis 25000 auf. Derartige Polymerisatdispersionen werden in der EP 0 536 597 beschrieben.

In einer weiteren Ausführungsform enthält die Klebstoffdispersion eine wässrige Polymerdispersion auf Basis von Copolymerisaten aus Vinylaromaten und konjugierten aliphatischen Dienen wobei die dispergierten Teilchen eine mittlere Teilchengröße von 80 bis 150 nm aufweisen und erhältlich sind durch radikalisch initiierte Emulsionscopolymerisation von

(a) 19,9 bis 80 Gew.-Teilen mindestens einer vinylaromatischen Verbindung,
(b) 19,9 bis 80 Gew.-Teilen mindestens eines konjugierten aliphatischen Diens,
(c) 0,1 bis 15 Gew.-Teilen mindestens einer ethylenisch ungesättigten Säure und
(d) 0 bis 20 Gew.-Teilen mindestens eines anderen monoethylenisch ungesättigten Monomeren,

wobei die Summe der Gew.-Teile der Monomeren (a), (b), (c) und (d) immer 100 beträgt, in wässrigem Medium in Gegenwart mindestens einer abgebauten Stärke mit einer intrinsischen Viskosität $\eta_i$ von weniger als 0,07 dl/g unter Verwendung von mindestens 0,9 Gew.-%, bezogen auf die insgesamt eingesetzten Monomeren, an Initiatoren ausgewählt unter Peroxodisulfaten, Peroxosulfaten, Azoinitiatoren, organischen Peroxiden, organischen Hydroperoxiden und Wasserstoffperoxid, wobei mindestens 30 Gew.-% der Initiatoren zusammen mit der abgebauten Stärke in dem wässrigen Medium vorgelegt und die Monomeren sowie die restlichen Initiatoren unter Polymerisationsbedingungen in diese Vorlage dosiert werden.

In eine anderen Ausführungsform der Klebstoffdispersion sind zusätzlich zu den dispergierten synthetischen Polymeren noch Stärken enthalten, wobei bevorzugt abgebaute Stärken eingesetzt werden und in einer speziellen Form Amylopektin Stärketypen, z.B. Amflora®-Stärke. Die Stärke kann zum einen in die fertige Dispersion eingemischt werden, zum anderen aber auch als Schutzkolloid bei der Dispersionsherstellung dienen.

Die Größenverteilung der Dispersionsteilchen in der Klebstoffdispersion kann monomodal, bimodal oder multimodal sein. Bei monomodaler Teilchengrößenverteilung ist die mittlere Teilchengröße der in der wässrigen Dispersion dispergierten Polymerteilchen vorzugsweise kleiner 400 nm, insbesondere kleiner 250 nm. Besonders bevorzugt liegt die mittlere Teilchengröße zwischen 140 und 250 nm. Unter mittlerer Teilchengröße wird hier der $d_{50}$-Wert der Teilchengrößenverteilung verstanden, d.h. 50 Gew.-% der Gesamtmasse aller Teilchen haben einen kleineren Teilchendurchmesser als der $d_{50}$-Wert. Die Teilchengrößenverteilung kann in bekannter Weise mit der analytischen Ultrazentrifuge (W. Mächtle, Makromolekulare Chemie 185 (1984), Seite 1025 - 1039) bestimmt werden. Bei bi- oder multimodaler Teilchengrößenverteilung kann die Teilchengröße bis zu 1000 nm betragen.

Die Klebstoffdispersion kann allein aus dem dispergierten Polymer und optional enthaltener Stärke bestehen. Die Klebstoffdispersion kann jedoch auch noch weitere Zusatzstoffe enthalten, z.B. Verlaufsmittel, Verdicker, vorzugsweise Assoziativverdicker, Entschäumer, Netzmittel oder Tackifier. Tackifier sind klebrigmachende Harze und z.B. aus Adhesive Age, Juli 1987, Seite 19-23 oder Polym. Mater. Sci. Eng. 61 (1989), Seite 588-592 bekannt. Für eine bessere Benetzung von Oberflächen kann die Klebstoffdispersion insbesondere Benetzungshilfsmittel, z. B. Fettalkoholethoxylate, Alkylphenolethoxylate, Nonylphenolethoxylate, Polyoxyethylen/Polyoxypropylene oder Natriumdodecylsulfonate enthalten. Die Menge an Zusatzstoffen beträgt im allgemeinen 0,05 bis 5 Gew.-Teile, insbesondere 0,1 bis 3 Gew.-Teile auf 100 Gew.-Teile Polymer (fest). Tackifier sind z.B. Naturharze, wie Kolophoniumharze und deren durch Disproportionierung oder Isomerisierung, Polymerisation, Dimerisation, Hydrierung entstehenden Derivate. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit. Des weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, a-Methylstyrol, Vinyltoluol Verwendung. Als Tackifier werden zunehmend auch Polyacrylate, welche ein geringes Molgewicht aufweisen, verwendet. Vorzugsweise haben diese Polyacrylate ein gewichtsmittleres Molekulargewicht $M_w$ unter 30 000. Die Polyacrylate bestehen bevorzugt zu mindestens 60, insbesondere mindestens 80 Gew.% aus $C_1$-$C_8$ Alkyl(meth)acrylaten. Bevorzugte Tackifier sind natürliche oder chemisch modifizierte Kolophoniumharze. Kolophoniumharze bestehen zum überwiegenden Teil aus Abietinsäure oder Abietinsäurederivaten. Die Tackifier können in einfacher Weise der Polymerdispersion zugesetzt werden. Vorzugsweise liegen die Tackifier dabei selber in Form einer wässrigen Dispersion vor. Die Gewichtsmenge der Tackifier beträgt vorzugsweise 5 bis 100 Gew.-Teile, besonders bevorzugt 10 bis 50 Gew.-Teile. bezogen auf 100 Gew.-Teile Polymer (fest/fest).

In einer Ausführungsform enthält die Klebstoffdispersion zusätzlich noch anorganische Füllstoffe. Der Gehalt an anorganischen Füllstoffen beträgt vorzugsweise von 1 bis 90 Gew.%, besonders bevorzugt von 5 bis 80 Gew.% oder von 20 bis 80 Gew.% oder von 40 bis 70 Gew.%, bezogen auf den Feststoffgehalt.

Geeignete Füllstoffe sind z.B. Calciumcarbonat sowie Calciumsulfat, Calciumaluminatsulfat, Bariumsulfat, Magnesiumcarbonat, wovon Carbonatpigmente, insbesondere Calciumcarbonat bevorzugt sind. Das Calciumcarbonat kann gemahlenes Calciumcarbonat (GCC, natural ground calcium carbonate), ausgefälltes Calciumcarbonat (PCC, precipitated calcium carbonate), Kalk oder Kreide sein. Geeignete Calciumcarbonatpigmente sind z.B. verfügbar als Covercarb® 60, Hydrocarb® 60 oder Hydrocarb® 90 ME. Weitere geeignete Füllstoffe sind z.B. Kieselsäuren, Aluminiumoxide, Aluminium-hydrat, Silikate, Titandioxid, Zinkoxid, Kaolin, Tonerde, Talkum oder Siliziumdioxid. Geeignete Füllstoffe sind z.B. verfügbar als Capim® MP 50 (Clay), Hydragloss® 90 (Clay), Amazon Plus Slurry (Kaolin) oder Talcum C10.

Die Wellpappe wird mittels eines Wellvorgangs hergestellt. Das Wellen erfolgt, in dem eine ungewellte Papierbahn als Wellmedium durch eine Wellvorrichtung geführt wird, wobei ein oder mehrere geeignet geformte Walzen (z.B. zwei Riffelwalzen) dem Medium ein gewelltes Profil verleihen. Um eine optimale Wellenbildung zu erzielen, kann der Wellenstoff mit Wasserdampf vorbehandelt oder mittels anderer Medien aufgeheizt bzw. erwärmt werden. Dabei wird aber eine maximale Temperatur von 95°C, vorzugsweise von 90 °C nicht überschritten. Die beim Wellvorgang verwendeten Temperaturen sind vorzugsweise im Bereich von 40 bis 90°C, besonders bevorzugt von 40 bis 60 °C. Das Papier wird erwärmt, um eine bessere Papierverformbarkeit für die Wellenbildung zu erzeugen. Der Klebstoff selber muss nicht unbedingt erwärmt werden, da er sich in einer bevorzugten Ausführungsform auch ohne Erwärmung verfilmen lässt. Für eine bessere Verfilmung des Klebstoffs kann aber nach der Beschichtung der Wellpappe mit dem Klebstoff optional mit einer Strahlungsquelle wie z.B. IR-Strahlern erwärmt werden, oder die Papierbahn kann über eine beheizte Walze umgelenkt werden.

Die Wellung und die unmittelbar anschließende Verklebung mit der ersten Deckbahn erfolgt in einem kontinuierlichen Prozess. Die Bahngeschwindigkeit der Papierbahnen beträgt vorzugsweise mehr als 150 m/min, insbesondere mehr als 200 m/min, mehr als 250 m/min oder mehr als 300 m/min.

Unmittelbar anschließend wird auf die Wellenspitzen des gewellten Mediums Wellklebstoff aufgetragen und eine glatte Papierbahn wird als Deckbahn (Deckpapier) unter leichtem Druck auf die Seite des Mediums mit dem Klebstoff aufgebracht, um eine einseitige Wellpappe zu erzeugen. Anschließend kann durch Auftragen von zusätzlichem Klebstoff auf die unbeklebte Seite der gewellten Papierbahn eine weitere Deckbahn geklebt werden, was zur Erzeugung einer einwandigen Standardwellpappe führt. Mehrwandige Wellpappen können hergestellt werden, indem nacheinander einseitige Pappen miteinander verbunden werden, gefolgt von einem abschließenden Aufbringen einer Deckbahn.

Der Auftrag des Klebstoffs kann in konventioneller Weise mit einem System von Walzen erfolgen, von denen einen Walze mit einem Klebstofffilm versehen ist. Beim Umlaufen des Wellenstoffs um diese Walze wird der Klebstofffilm auf die Rippenseite (Wellenspitzen) des Wellenstoffs übertragen. Der Klebstoffauftrag kann aber auch durch andere geeignete Vorrichtungen erfolgen, z.B. mit Düsen, Schlitzdüsen oder ähnlichen.

Die Auftragsmenge des Klebstoffs beträgt vorzugsweise von 2 bis 15 g/m², insbesondere von 3 bis 7 g/m², bezogen auf Feststoffgehalt und auf die Gesamtfläche des Wellenstoffs. Auf die Wellenstoffspitzen können je nach Geometrie beispielsweise 15 bis 25 g/m² aufgetragen werden.

Der Wellklebstoff muss vor dem Auftragen nicht erwärmt werden. Vorzugsweise wird daher nicht erwärmter Wellklebstoff auf die gewellte Papierbahn aufgetragen, d.h. der Klebstoff wird vor dem Auftrag nicht durch eine separate Wärmequelle erwärmt und hat eine Temperatur von vorzugsweise kleiner oder gleich 25°C. Optional kann aber auch eine geringe Erwärmung des Klebstoffs auf Temperaturen von z.B. größer 25°C bis 50 °C oder bis 40 °C erfolgen.

Gegenstand der Erfindung ist auch ein Verfahren zur Herstellung von Wellpappe, wobei die hergestellte Wellpappe mindestens eine gewellte Papierbahn und mindestens eine glatte Deckbahn aufweist und die Wellung der gewellten Papierbahn bei Papiertemperaturen unterhalb von 95°C und mit einer Bahngeschwindigkeit von größer 150 m/min erzeugt wird

- wobei in einem kontinuierlichen Prozess unmittelbar nach Erzeugung der Wellung der gewellten Papierbahn ein vorzugsweise nicht erwärmter Wellklebstoff auf die gewellte Papierbahn aufgetragen wird und die gewellte Papierbahn mit mindestens einer ersten Deckbahn verklebt wird;
- wobei als Wellklebstoff erfindungsgemäß eine der oben näher beschriebenen wässrigen Klebstoffdispersionen eingesetzt wird.

Der erfindungsgemäß verwendete Klebstoff ermöglicht ein gutes Recyclingverhalten der Wellpappe. Ein gutes Recyclingverhalten liegt dann vor, wenn nach dem in den Beispielen beschriebenen Test eine Bewertung von 4 oder besser erhalten wird. Bei diesem Test wird ein Wellstoffpapier mit dem erfindungsgemäßen Klebstoff beschichtet und mit einem Deckpapier kaschiert. Das erhaltene Laminat wird nach dem Trocknen in einem Repulpierapparat zerfasert. Anschließend wird aus dem so erzeugten Pulp ein Papierblatt erzeugt und dieses hinsichtlich Stippen und sichtbaren Fremdstoffen visuell beurteilt.

Es hat sich gezeigt, dass ein besonders gutes Recyclingverhalten erreicht werden kann, wenn nicht nur die Glasübergangstemperatur im beanspruchten Bereich liegt, sondern auch die synthetischen, dispergierten Polymeren zu mindestens 3 Gew.%, vorzugsweise 4 bis 15 Gew.%, bezogen auf die Summe aller Monomere aus hydrophilen Comonomeren aufgebaut sind. Hydrophile Comonomere sind Monomere mit hydrophilen Gruppen. Hydrophile Gruppen sind beispielsweise Säuregruppen, sowie Aminogruppen, Ammoniumgruppen, Hydroxygruppen oder Polyethylenoxidgruppen mit mindestens zwei Ethylenoxideinheiten. Hydrophile Monomere sind z.B. ethylenisch ungesättigte Säuremonomere, ethylenisch ungesättigte Aminmonomere und ethylenisch ungesättigte Monomere mit Polyethylenoxidgruppen, wobei ethylenisch ungesättigte Säuremonomere bevorzugt sind.

Ethylenisch ungesättigte Säuremonomere sind beispielsweise ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende alpha,beta-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich z.B. Vinylsulfonsäure, Styrolsulfonsäure, Acrylamidomethylpropansulfonsäure, Sulfopropylacrylat und Sulfopropylmethacrylat. Die Säuregruppen enthaltenden Monomeren können in Form der freien Säuren sowie in partiell oder vollständig mit Alkalilaugen oder mit Ammoniak oder mit einer Ammoniumbase neutralisierten Form bei der Polymerisation eingesetzt werden. Vorzugsweise verwendet man Natronlauge, Kalilauge oder Ammoniak als Neutralisationsmittel. Besonders bevorzugt sind Acrylsäure, Methacrylsäure und Itaconsäure.

Aminmonomere sind beispielsweise Aminoalkyl(meth)acrylate wie z.B. 2-Aminoethyl-(meth)acrylat, Monoalkylaminoalkyl(meth)acrylate, Dialkylaminoalkyl(meth)acrylate, Aminoalkyl(meth)acrylamide, Monoalkylaminoalkyl(meth)acrylamide und Dialkylaminoalkyl(meth)acrylamide. Alkylgruppen weisen vorzugsweise von 1 bis 20 C-Atome auf. Die Aminogruppen enthaltenden Monomeren können in Form der freien Aminogruppen sowie in partiell oder vollständig mit Säuren oder Quaternisierungsmitteln zu Ammoniumgruppen umgesetzter Form vorliegen.

Hydrophile Comonomere mit Hydroxygruppen sind z.B. C2-C8 Hydroxyalkylester von Acrylsäure oder von Methacrylsäure.

Hydrophile Comonomere mit Polyethylenglykolgruppen sind z.B. solche der allgemeinen Formel

$$H_2C=CR^1-COO-(EO)_n-(PO)_m-R^2$$

wobei $R^1$ Wasserstoff oder Methyl bedeutet, n eine Zahl von mindestens zwei, vorzugsweise 6 bis 100 oder 10 bis 40 bedeutet, m eine Zahl von Null bis 50, vorzugsweise Null bis 20 bedeutet, EO eine Ethylenoxidgruppe ($-CH_2-CH_2-O-$) bedeutet, PO eine Propylenoxidgruppe ($-CH_2-CH(CH_3)-O-$) bedeutet und $R^2$ Wasserstoff oder eine C1-C30 Alkylgruppe oder eine C1-C30 Alkarylgruppe bedeutet, wobei n vorzugsweise größer oder gleich m ist und n+m vorzugsweise 6 bis 100 oder 10 bis 40 ist.

Die erfindungsgemäß eingesetzten Wellklebstoffe bzw. das erfindungsgemäße Verfahren haben folgende Vorteile gegenüber bekannten Verfahren:

Die Klebstoffe ermöglichen eine energie- und kostengünstigere Herstellung von Wellpappe als mit den herkömmlichen Stärkeklebstoffen. Die erfindungsgemäßen Klebstoffe erlauben eine gute Verklebung bei vergleichsweise niedrigen Temperaturen und hohen Bahngeschwindigkeiten, wobei insbesondere die ausgewählten Klebstoffzusammensetzungen eine möglichst schnelle Abbindung sowie eine möglichst hohe Anfangsklebrigkeit bei niedrigen Temperaturen aufweisen. Durch den Klebstoff wird die Recyclefähigkeit der Wellpappe nicht beeinträchtigt.

**Beispiele**

Sofern sich aus dem Zusammenhang nichts anderes ergibt, bedeuten die Angaben in Prozent immer Gewichtsprozent. Die Angabe eines Gehalts bezieht sich auf den Gehalt in wässriger Lösung oder Dispersion.

Beispiel 1

Copolymer aus 39,5 Gew.-Teilen n-Butylacrylat, 56,5 Gew.-Teilen Styrol, 4 Gew.-Teilen Methacrylsäure, polymerisiert durch Emulsionspolymerisation in Wasser in Gegenwart von 0,1 Gew.-Teilen tert.-Dodecylmercaptan, 1,2 Gew.-Teilen Disponil® FES 27 (Emulgator), 0,25 Gew.-Teilen Dowfax 2A1 (Emulgator), 0,6 Gew.-Teilen Natriumpersulfat (Initiator).
Feststoffgehalt: 49%; pH 6,2; Tg +41 °C

Beispiel 2

Copolymer aus 43 Gew.-Teilen n-Butylacrylat, 52 Gew.-Teilen Styrol, 5 Gew.-Teilen Acrylsäure, polymerisiert durch Emulsionspolymerisation in Wasser in Gegenwart von 0,5 Gew.-Teilen tert.-Dodecylmercaptan, 0,9 Gew.-Teilen Disponil® FES 27 (Emulgator), 0,6 Gew.-Teilen Natriumpersulfat (Initiator).
Feststoffgehalt: 54%; pH 4,0; Tg +31°C

Beispiel 3

Copolymer aus 38 Gew.-Teilen n-Butylacrylat, 55 Gew.-Teilen Styrol, 5 Gew.-Teilen Vinylacetate, 2 Gew.-Teilen Acrylsäure, polymerisiert durch Emulsionspolymerisation in Wasser in Gegenwart von 0,1 Gew.-Teilen tert.-Dodecylmercaptan, 1,2 Gew.-Teilen Disponil® FES 27 (Emulgator), 0,25 Gew.-Teilen Dowfax 2A1 (Emulgator), 0,6 Gew.-Teilen Natriumpersulfat (Initiator).
Feststoffgehalt: 49%; pH 4,0; Tg +35°C

Beispiel 4

Copolymer aus 42 Gew.-Teilen n-Butylacrylat, 48 Gew.-Teilen Styrol, 5 Gew.-Teilen Vinylacetat, 5 Gew.-Teilen Acrylsäure, polymerisiert durch Emulsionspolymerisation in Wasser in Gegenwart von 0,5 Gew.-Teilen tert.-Dodecylmercaptan, 0,9 Gew.-Teilen Disponil® FES 27, 0,6 Gew.-Teilen Natriumpersulfat.
Feststoffgehalt: 52%; pH 4,0; Tg +28°C

Beispiel 5

Copolymer aus 36 Gew.-Teilen n-Butylacrylat, 62 Gew.-Teilen Styrol, 2 Gew.-Teilen Acrylsäure, polymerisiert durch Emulsionspolymerisation in Wasser in Gegenwart von 0,1 Gew.-Teilen tert.-Dodecylmercaptan, 1,2 Gew.-Teilen Disponil® FES 27 (Emulgator), 0,25 Gew.-Teilen Dowfax 2A1 (Emulgator), 0,6 Gew.-Teilen Natriumpersulfat (Initiator).
Feststoffgehalt: 49%; pH 4,1; Tg +43°C

Beispiel 6

Copolymer aus 33 Gew.-Teilen 2-Propylheptylacrylat, 62 Gew.-Teilen Styrol, 5 Gew.-Teilen Acrylsäure; polymerisiert durch Emulsionspolymerisation in Wasser in Gegenwart von 0,5 Gew.-Teilen tert.-Dodecylmercaptan, 0,9 Gew.-Teilen Disponil® FES 27, 0,6 Gew.-Teilen Natriumpersulfat.
Feststoffgehalt: 54%; pH 4,7; Tg +37°C

Beispiel 7

Copolymer aus 49,5 Gew.-Teilen n-Butylacrylat, 48,5 Gew.-Teilen Styrol, 2 Gew.-Teilen Acrylsäure, polymerisiert durch Emulsionspolymerisation in Wasser in Gegenwart von 0,1 Gew.-Teilen tert.-Dodecylmercaptan, 1,2 Gew.-Teilen Disponil® FES 27 (Emulgator), 0,25 Gew.-Teilen Dowfax 2A1 (Emulgator)
0,6 Gew.-Teilen Natriumpersulfat (Initiator).
Feststoffgehalt: 49%; pH 4,0; Tg +44°C

Beispiel 8

Copolymer aus 60,5 Gew.-Teilen Styrol, 28,0 Gew.-Teilen Butadien, 11 Gew.-Teilen Acrylsäure; 0,5 Gew.-Teilen Itaconsäure; polymerisiert durch Emulsionspolymerisation in Wasser in Gegenwart von 1,1 Gew.-Teilen tert.-Dodecylmercaptan; 0,5 Gew.-Teilen Disponil® FES 27; 0,9 Gew.-Teilen Natriumpersulfat.
Feststoffgehalt: 52%; pH 5,4; Tg +38,2 °C

Beispiel 9

Copolymer aus 56,5 Gew.-Teilen Styrol, 32 Gew.-Teilen Butadien, 11 Gew.-Teilen Acrylsäure; 0,5 Gew.-Teilen Itaconsäure; polymerisiert durch Emulsionspolymerisation in Wasser in Gegenwart von 1,1 Gew.-Teilen tert.-Dodecylmercaptan; 0,5 Gew.-Teilen Disponil® FES 27; 0,9 Gew.-Teilen Natriumpersulfat.
Feststoffgehalt: 50%; pH 5,5; Tg +30°C

Beispiel 10

Copolymer aus 56,5 Gew.-Teilen Styrol, 32,0 Gew.-Teilen Butadien, 11 Gew.-Teilen Acrylsäure; 0,5 Gew.-Teilen Itaconsäure; polymerisiert durch Emulsionspolymerisation in Wasser in Gegenwart von 1,1 Gew.-Teilen tert.-Dodecylmercaptan; 0,5 Gew.-Teilen Lumiten 1-SC; 0,9 Gew.-Teilen Natriumpersulfat.
Feststoffgehalt: 52%; pH 5,6; Tg +26,3 °C

Beispiel 11

Copolymer aus 65,5 Gew.-Teilen Styrol, 23 Gew.-Teilen Butadien, 11 Gew.-Teilen Acrylsäure; 0,5 Gew.-Teilen Itaconsäure; polymerisiert durch Emulsionspolymerisation in Wasser in Gegenwart von 1,1 Gew.-Teilen tert.-Dodecylmercaptan; 0,5 Gew.-Teilen Disponil® FES 27; 0,9 Gew.-Teilen Natriumpersulfat.
Feststoffgehalt: 49%; pH 5,3; Tg +53°C

Beispiel 12

Die Copolymerdispersion aus Beispiel 2 wurde abgemischt mit Precarb 100 (Calciumcarbonat) im Verhältnis 77:23 (fest/fest) bei gleichem Gesamt-Feststoffgehalt, d.h. ein Teil des Polymers wurde durch Calciumcarbonat ersetzt.
Feststoffgehalt: 54%; pH 6,5

Vergleichsbeispiel V1

Copolymer aus 52 Gew.-Teilen n-Butylacrylat, 38 Gew.-Teilen Styrol, 10 Gew.-Teilen Acrylsäure; polymerisiert durch Emulsionspolymerisation in Wasser in Gegenwart von 0,5 Gew.-Teilen tert.-Dodecylmercaptan; 1,2 Gew.-Teilen Disponil® FES 27, 0,25 Gew.-Teilen Dowfax® 2 A1; 0,6 Gew.-Teilen Natriumpersulfat;
Feststoffgehalt: 49%; pH 3,5; Tg +17°C

Vergleichsbeispiel V2

Copolymer aus 41 Gew.-Teilen Ethylacrylat, 57 Gew.-Teilen Styrol, 2 Gew.-Teilen Acrylsäure; polymerisiert durch Emulsionspolymerisation in Wasser in Gegenwart von 0,1 Gew.-Teilen tert.-Dodecylmercaptan, 1,2 Gew.-Teilen Disponil® FES 27, 0,25 Gew.-Teilen Dowfax® 2 A1; 0,6 Gew.-Teilen Natriumpersulfat.
Feststoffgehalt: 49%; pH 4,6; Tg +57°C

Vergleichsbeispiel V3

Copolymer aus 64,5 Gew.-Teilen Styrol, 35 Gew.-Teilen Butadien, 0,5 Gew.-Teilen Itaconsäure; polymerisiert durch Emulsionspolymerisation in Wasser in Gegenwart von 1,1 Gew.-Teilen tert.-Dodecylmercaptan; 0,5 Gew.-Teilen Disponil® FES 27; 0,9 Gew.-Teilen Natriumpersulfat.
Feststoffgehalt: 51% ; pH 11,6; Tg +10°C

Anwendungstests

Nassanzugsvermögen:

Zur Beurteilung des Nassanzugsvermögens wird ein Wellenstoffpapier mit einem Flächengewicht von 105 g/m$^2$ bei 55°C mittels eines Rakels mit einer Klebstoffschicht von etwa 1 mm beschichtet. Fast zeitgleich mit der Beschichtung wird ein Deckpapier (Testliner 3) auf den nassen Klebstoff kaschiert. Direkt nach der Nasskaschierung wird eine Stoppuhr gestartet und die Verklebung langsam auseinandergezogen. Gemessen wird die Zeit, bis ein signifikanter Faserausriss sichtbar wird. Je kürzer die Zeit bis zum Faserausriss, desto besser das Nassanzugsvermögen. Bei einem Wert von kleiner 10 s ist davon auszugehen, dass auf einer Produktionsmaschine auch bei Produktionsgeschwindigkeit von größer 300 m/min die Nassverklebung hinreichend fest ist, um nicht, z.B. an einer Umlenkwalze, in der Maschine auseinanderzugehen.

Recyclingverhalten:

Ein Wellenstoffpapier mit einem Flächengewicht von 105 g/m$^2$ wird mit 5 g/m$^2$ (20 μm Rakel) des zu prüfenden Klebstoffs beschichtet und mit einem Testliner 3 nasskaschiert. Nach der Trocknung des so hergestellten Laminats für 5 min bei 90°C wird das Laminat 30 min in einem Repulpierapparat zerfasert. Anschließend wird aus dem so erzeugten Pulp ein Papierblatt erzeugt und dieses hinsichtlich Stippen und sichtbaren Fremdstoffen visuell beurteilt. Auf einer Skala von 1 bis bedeutet die Note 1 "keine sichtbaren Stippen / keine sichtbaren Fremdstoffe" und die Note 10 "sehr viele sichtbare Stippen / sehr viele Fremdstoffe". Bei einer Benotung von 4 und besser ist davon auszugehen, dass ein solches Material gut recyclebar in den üblichen Recycleprozessen ist.

| Beispiel | Säuregehalt des Polymers | Tg des Polymers | Nassanzugsvermögen | Recyclingtest |
|---|---|---|---|---|
| 1 | 4 Gew.% | 41 °C | 6s | 2 |
| 2 | 5 Gew.% | 31 °C | 4s | 3 |
| 3 | 2 Gew.% | 35 °C | 4s | 2 |
| 4 | 5 Gew.% | 28 °C | 4s | 3 |
| 5 | 2 Gew.% | 43 °C | 7s | 2 |
| 6 | 5 Gew.% | 37 °C | 4s | 2 |
| 7 | 2 Gew.% | 44 °C | 5s | 2 |
| 8 | 11 Gew.% | 38 °C | 4s | 2 |
| 9 | 11,5 Gew.% | 30 °C | 5s | 2 |
| 10 | 11 Gew.% | 26 °C | 4s | 2 |
| 11 | 11,5 Gew.% | 53 °C | 4s | 2 |
| 12 | 5 Gew.% | 31 °C | 4s | 3 |
| V1 | 10 Gew.% | 17 °C | 6s | 9 |
| V2 | 2 Gew.% | 57 °C | > 60s | 2 |
| V3 | 0,5 Gew.% | 10 °C | 3s | 9 |

**Patentansprüche**

1. Verwendung synthetischer Klebstoffe für die Herstellung von Wellpappe, wobei die Wellpappe mindestens eine gewellte Papierbahn und mindestens eine glatte Deckbahn aufweist und die Wellung der gewellten Papierbahn bei Papiertemperaturen unterhalb von 95°C und mit einer Bahngeschwindigkeit von größer 150 m/min erzeugt wird;

    • wobei in einem kontinuierlichen Prozess unmittelbar nach Erzeugung der Wellung der gewellten Papierbahn ein Wellklebstoff auf die gewellte Papierbahn aufgetragen wird und die gewellte Papierbahn mit mindestens einer ersten Deckbahn verklebt wird;
    • wobei als Wellklebstoff eine wässrige Klebstoffdispersion eingesetzt wird auf Basis mindestens eines synthetischen, dispergierten Polymeren, ausgewählt aus der Gruppe bestehend aus Acrylatcopolymeren, Copolymerisaten aus Vinylaromaten und konjugierten aliphatischen Dienen und Vlnylacetat/Alkylen Copolymeren,
    • wobei die synthetischen, dispergierten Polymere Glasübergangstemperaturen aufweisen, welche größer 20 °C sind und unterhalb der Oberflächentemperatur der gewellten Papierbahn, auf die sie aufgetragen werden, liegen.

2. Verwendung nach dem vorhergehenden Anspruch, **dadurch gekennzeichnet, dass** das synthetische Polymer aus mindestens 3 Gew.%, bezogen auf die Summe aller Monomere aus hydrophilen Monomeren, vorzugsweise aus Säuremonomeren, aufgebaut ist.

3. Verwendung nach dem vorhergehenden Anspruch, **dadurch gekennzeichnet, dass** die hydrophilen Monomere ausgewählt sind aus Acrylsäure, Methacrylsäure, Itaconsäure oder Mischungen dieser Monomere.

4. Verwendung nach einem der vorhergehenden Ansprüche, **dadurch gekennzeichnet, dass** das dispergierte Polymer eine Glasübergangstemperatur von kleiner 60°C und größer 20°C, vorzugsweise von kleiner 55°C und größer 25°C aufweist.

5. Verwendung nach einem der vorhergehenden Ansprüche, **dadurch gekennzeichnet, dass** die Mindestverarbeitungstemperatur der Klebstoffdispersion kleiner 80°C, vorzugsweise von 5 bis 60°C beträgt.

6. Verwendung nach einem der vorhergehenden Ansprüche, **dadurch gekennzeichnet, dass** die Klebstoffdispersion eine wässrige Polymerisatdispersion enthält von durch radikalische Polymerisation ungesättigter Monomeren erhältlichen Polymersaten, welche wenigstens ein durch Hydrolyse in wässriger Phase erhältliches Stärkeabbauprodukt zugesetzt enthalten.

7. Verwendung nach einem der vorhergehenden Ansprüche, **dadurch gekennzeichnet, dass** die synthetischen, dispergierten Polymere, ausgewählt sind aus der Gruppe bestehend aus Acrylatcopolymeren von mindestens zwei verschiedenen $C_1$- bis $C_8$-Alkyl(meth)acrylaten, Styrol/Butadien Copolymeren und Vinylacetat/Ethylen Copolymeren.

8. Verwendung nach einem der vorhergehenden Ansprüche, **dadurch gekennzeichnet, dass** die Bahngeschwindigkeit mindestens 200 m/min beträgt.

9. Verwendung nach einem der vorhergehenden Ansprüche, **dadurch gekennzeichnet, dass** als Wellklebstoff eine wässrige Klebstoffdispersion mit mehr als 40 Gew.% Feststoffgehalt eingesetzt wird.

10. Verwendung nach einem der vorhergehenden Ansprüche, **dadurch gekennzeichnet, dass** der Wellklebstoff anorganische Füllstoffe in einer Menge von1 bis 90 Gew.%, bezogen auf den Feststoffgehalt, enthält.

11. Verfahren zur Herstellung von Wellpappe, wobei die hergestellte Wellpappe mindestens eine gewellte Papierbahn und mindestens eine glatte Deckbahn aufweist und die Wellung der gewellten Papierbahn bei Papiertemperaturen unterhalb von 95°C und mit einer Bahngeschwindigkeit von größer 150 m/min erzeugt wird;

    • wobei in einem kontinuierlichen Prozess unmittelbar nach Erzeugung der Wellung der gewellten Papierbahn ein Wellklebstoff auf die gewellte Papierbahn aufgetragen wird und die gewellte Papierbahn mit mindestens einer ersten Deckbahn verklebt wird;
    • wobei als Wellklebstoff eine wässrige Klebstoffdispersion mit mehr als 40 Gew.% Feststoffgehalt eingesetzt wird auf Basis mindestens eines synthetischen, dispergierten Polymeren, ausgewählt aus der Gruppe bestehend aus Acrylatcopolymeren, Copolymerisaten aus Vinylaromaten und konjugierten aliphatischen Dienen und Vinylacetat/Alkylen Copolymeren,

• wobei die synthetischen, dispergierten Polymere Glasübergangstemperaturen aufweisen, welche größer 20 °C sind und unterhalb der Oberflächentemperatur der gewellten Papierbahn, auf die sie aufgetragen werden, liegen.

**Claims**

1. The use of synthetic adhesives in the manufacture of corrugated fiberboard wherein the corrugated fiberboard includes at least one corrugated sheet of paper and at least one flat linerboard and the corrugation of the corrugated sheet of paper is produced at paper temperatures below 95°C and at a lineal speed of above 150 m/min;

   • wherein in a continuous operation immediately after production of the corrugation of the corrugated sheet of paper a corrugated board adhesive is applied to the corrugated sheet of paper and the corrugated sheet of paper is adhered to at least one first linerboard;
   • wherein the corrugated board adhesive used is an aqueous adhesive dispersion based on at least one synthetic, dispersed polymer selected from the group consisting of acrylate copolymers, copolymers of vinyl aromatics and conjugated aliphatic dienes and vinyl acetate-alkylene copolymers,
   • wherein the synthetic, dispersed polymers have glass transition temperatures which are above 20°C and below the surface temperature of the corrugated sheet of paper to which they are applied.

2. The use according to the preceding claim wherein the synthetic polymer is constructed of at least 3% by weight, based on the sum of all monomers, of hydrophilic monomers, preferably of acid monomers.

3. The use according to the preceding claim wherein the hydrophilic monomers are selected from acrylic acid, methacrylic acid, itaconic acid or mixtures thereof.

4. The use according to any preceding claim wherein the dispersed polymer has a glass transition temperature of below 60°C and above 20°C, preferably of below 55°C and above 25°C.

5. The use according to any preceding claim wherein the minimum processing temperature of the adhesive dispersion is below 80°C, preferably in the range from 5 to 60°C.

6. The use according to any preceding claim wherein the adhesive dispersion comprises an aqueous polymeric dispersion of polymers obtainable by free-radical polymerization of unsaturated monomers and comprising in added form at least one starch degradation product obtainable by hydrolysis in aqueous phase.

7. The use according to any preceding claim wherein the synthetic, dispersed polymers are selected from the group consisting of acrylate copolymers of at least two different $C_1$- to $C_8$-alkyl (meth)acrylates, styrene-butadiene copolymers and vinyl acetate-ethylene copolymers.

8. The use according to any preceding claim wherein the lineal speed is at least 200 m/min.

9. The use according to any preceding claim wherein the corrugated board adhesive used comprises an aqueous adhesive dispersion having a solids content of more than 40% by weight.

10. The use according to any preceding claim wherein the corrugated board adhesive comprises inorganic fillers in an amount of 1% to 90% by weight, based on the solids content.

11. A process for manufacturing corrugated fiberboard wherein the corrugated fiberboard includes at least one corrugated sheet of paper and at least one flat linerboard and the corrugation of the corrugated sheet of paper is produced at paper temperatures below 95°C and at a lineal speed of above 150 m/min;

    • wherein in a continuous operation immediately after production of the corrugation of the corrugated sheet of paper a corrugated board adhesive is applied to the corrugated sheet of paper and the corrugated sheet of paper is adhered to at least one first linerboard;
    • wherein the corrugated board adhesive used is an aqueous adhesive dispersion having a solids content of more than 40% by weight based on at least one synthetic, dispersed polymer selected from the group consisting of acrylate copolymers, copolymers of vinyl aromatics and conjugated aliphatic dienes and vinyl acetate-alkylene copolymers,

• wherein the synthetic, dispersed polymers have glass transition temperatures which are above 20°C and below the surface temperature of the corrugated sheet of paper to which they are applied.

**Revendications**

1. Utilisation d'adhésifs synthétiques pour la fabrication de carton ondulé, le carton ondulé comprenant au moins une bande de papier ondulée et au moins une bande de recouvrement lisse, et l'ondulation de la bande de papier ondulée étant formée à des températures du papier inférieures à 95 °C et avec une vitesse de bande supérieure à 150 m/minute,

   - selon un procédé continu, un adhésif d'ondulation étant appliqué sur la bande de papier ondulée directement après la formation de l'ondulation de la bande de papier ondulée et la bande de papier ondulée étant collée avec au moins une première bande de recouvrement,
   - une dispersion adhésive aqueuse à base d'au moins un polymère synthétique dispersé, choisi dans le groupe constitué par les copolymères d'acrylate, les copolymères de composés aromatiques de vinyle et de diènes aliphatiques conjugués et les copolymères d'acétate de vinyle/alkylène, étant utilisée en tant qu'adhésif d'ondulation,
   - les polymères synthétiques dispersés présentant des températures de transition vitreuse qui sont supérieures à 20 °C et inférieures à la température de surface de la bande de papier ondulée sur laquelle ils sont appliqués.

2. Utilisation selon la revendication précédente, **caractérisée en ce que** le polymère synthétique est constitué d'au moins 3 % en poids, par rapport à la somme de tous les monomères, de monomères hydrophiles, de préférence de monomères acides.

3. Utilisation selon la revendication précédente, **caractérisée en ce que** les monomères hydrophiles sont choisis parmi l'acide acrylique, l'acide méthacrylique, l'acide itaconique ou les mélanges de ces monomères.

4. Utilisation selon l'une quelconque des revendications précédentes, **caractérisée en ce que** le polymère dispersé présente une température de transition vitreuse inférieure à 60 °C et supérieure à 20 °C, de préférence inférieure à 55 °C et supérieure à 25 °C.

5. Utilisation selon l'une quelconque des revendications précédentes, **caractérisée en ce que** la température d'usinage minimale de la dispersion adhésive est inférieure à 80 °C, de préférence de 5 à 60 °C.

6. Utilisation selon l'une quelconque des revendications précédentes, **caractérisée en ce que** la dispersion adhésive contient une dispersion polymère aqueuse de polymères pouvant être obtenus par polymérisation radicalaire de monomères insaturés, qui contiennent au moins un produit de décomposition d'amidon ajouté, pouvant être obtenu par hydrolyse en phase aqueuse.

7. Utilisation selon l'une quelconque des revendications précédentes, **caractérisée en ce que** les polymères synthétiques dispersés sont choisis dans le groupe constitué par les copolymères d'acrylate d'au moins deux (méth)acrylates d'alkyle en $C_1$ à $C_8$ différents, les copolymères de styrène/butadiène et les copolymères d'acétate de vinyle/éthylène.

8. Utilisation selon l'une quelconque des revendications précédentes, **caractérisée en ce que** la vitesse de bande est d'au moins 200 m/minute.

9. Utilisation selon l'une quelconque des revendications précédentes, **caractérisée en ce qu'**une dispersion adhésive aqueuse contenant plus de 40 % en poids de solides est utilisée en tant qu'adhésif d'ondulation.

10. Utilisation selon l'une quelconque des revendications précédentes, **caractérisée en ce que** l'adhésif d'ondulation contient des charges inorganiques en une quantité de 1 à 90 % en poids, par rapport la teneur en solides.

11. Procédé de fabrication de carton ondulé, selon lequel le carton ondulé fabriqué comprend au moins une bande de papier ondulée et au moins une bande de recouvrement lisse, et l'ondulation de la bande de papier ondulée est formée à des températures du papier inférieures à 95 °C et avec une vitesse de bande supérieure à 150 m/minute,

- selon un procédé continu, un adhésif d'ondulation étant appliqué sur la bande de papier ondulée directement après la formation de l'ondulation de la bande de papier ondulée et la bande de papier ondulée étant collée avec au moins une première bande de recouvrement,
- une dispersion adhésive aqueuse contenant plus de 40 % en poids de solides, à base d'au moins un polymère synthétique dispersé, choisi dans le groupe constitué par les copolymères d'acrylate, les copolymères de composés aromatiques de vinyle et de diènes aliphatiques conjugués et les copolymères d'acétate de vinyle/alkylène, étant utilisée en tant qu'adhésif d'ondulation,
- les polymères synthétiques dispersés présentant des températures de transition vitreuse qui sont supérieures à 20 °C et inférieures à la température de surface de la bande de papier ondulée sur laquelle ils sont appliqués.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CA 1071085
- DE 2347145
- DE 2243687
- DE 3042850
- DE 1594231
- EP 0181579 A
- WO 06086754 A
- WO 2009145642 A
- EP 0536597 A

**In der Beschreibung aufgeführte Nicht-Patentliteratur**

- **KOLLOID-ZEITSCHRIFT ; ZEITSCHRIFT.** *Polymere,* vol. 190, 1
- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Ecyclopedia of Industrial Chemistry. VCH, 1992, vol. A21, 169
- **J. BRANDRUP ; E.H. IMMERGUT.** Polymer Handbook. J. Wiley, 1966
- POLYMER HANDBOOK. J. Wiley, 1975
- POLYMER HANDBOOK. J. Wiley, 1989
- **W. MÄCHTLE.** *Makromolekulare Chemie,* 1984, vol. 185, 1025-1039
- *Adhesive Age,* Juli 1987, 19-23
- *Polym. Mater. Sci. Eng.,* 1989, vol. 61, 588-592